# EUROPÄISCHE PATENTANMELDUNG

(11) **EP 4 814 351 A1**
(43) Veröffentlichungstag der Anmeldung: **30.09.2026**
(21) Anmeldenummer: 25166258.1
(22) Anmeldetag: 26.03.2025
(51) Int. Cl.: F16K 11/078, F16K 21/06

(54) **MENGENEINSTELLVENTIL, INSBESONDERE SANITÄRES EINHEBELVENTIL**

(71) Anmelder: Hansgrohe SE, 77761 Schiltach (DE)
(72) Erfinder: King, Jürgen, 78730 Lauterbach (DE); Werner, Bernd, 78727 Oberndorf / Beffendorf (DE); Wössner, Franziska, 78733 Aichhalden / Rötenberg (DE)
(74) Vertreter: Patentanwälte Ruff, Wilhelm, Beier, Dauster & Partner mbB

(57) **Zusammenfassung**

Die Erfindung bezieht sich auf ein Mengeneinstellventil, insbesondere sanitäres Einhebel-Mischventil mit einem Ventilgrundkörper (1), der ein Ventilgehäuse (2), eine Ventileinlassstruktur zur Fluidzufuhr und eine Ventilauslassstruktur zur Fluidabgabe aufweist, und einer Mengensteuereinheit (5), die eine nutzerbetätigbar und beweglich am Ventilgrundkörper (1) angeordnete Einstelleinheit (6) umfasst. Die Einstelleinheit ist längs eines Mengenbetätigungsweges (MW) bewegbar und die Mengensteuereinheit dafür eingerichtet ist, durch Bewegen der Einstelleinheit längs des Mengenbetätigungsweges die Menge an über die Ventilauslassstruktur abgebbarem Fluid variabel einzustellen. Der Mengenbetätigungsweg weist eine erste Mengenendstellung, die eine erste Ventiloffenstellung bildet, eine zweite Mengenendstellung, die eine zweite Ventiloffenstellung bildet, und eine Ventilschließstellung (VS) zwischen der ersten und der zweiten Mengenendstellung aufweist. Eine Rückstelleinheit (7) dient zur selbsttätigen Rückstellung der Einstelleinheit von der zweiten Mengenendstellung zur Ventilschließstellung. Erfindungsgemäß ist eine Rasteinheit (8) vorgesehen, die für den Mengenbetätigungsweg der Einstelleinheit eine überfahrbare Raststellung bereitstellt, welche die Ventilschließstellung des Mengenbetätigungsweges bildet. Verwendung z.B. als Einhebel-Mischventil in Sanitärarmaturen.

## Beschreibung

Die Erfindung bezieht sich auf ein Mengeneinstellventil nach dem Oberbegriff des Anspruchs 1.

Dementsprechend umfasst das Mengeneinstellventil einen Ventilgrundkörper, der ein Ventilgehäuse, eine Ventileinlassstruktur zur Fluidzufuhr und eine Ventilauslassstruktur zur Fluidabgabe aufweist, und eine Mengensteuereinheit, die eine nutzerbetätigbar und beweglich am Ventilgrundkörper angeordnete Einstelleinheit umfasst. Die Einstelleinheit ist längs eines Mengenbetätigungswegs bewegbar. Die Mengensteuereinheit ist dafür eingerichtet, bei Bewegen der Einstelleinheit längs des Mengenbetätigungswegs die Menge an über die Ventilauslassstruktur abgebbarem Fluid variabel einzustellen. Dabei weist der Mengenbetätigungsweg eine erste Mengenendstellung, die eine erste Ventiloffenstellung bildet, und eine zweite Mengenendstellung auf, die eine zweite Ventiloffenstellung bildet, sowie eine Ventilschließstellung zwischen der ersten und der zweiten Mengenendstellung. Des Weiteren beinhaltet das Mengeneinstellventil eine Rückstelleinheit zur selbsttätigen Rückstellung der Einstelleinheit von der zweiten Mengenendstellung zur Ventilschließstellung.

Unter der Ventilschließstellung wird hierbei vorliegend eine vollständig geschlossene Ventilstellung verstanden, in der das Mengeneinstellventil folglich kein Fluid abgibt, d.h. die Fluidabgabemenge gleich null ist. Unter Ventiloffenstellung wird vorliegend jede Ventilstellung verstanden, in der das Mengeneinstellventil zumindest partiell geöffnet ist und daher das Fluid in entsprechender eingestellter Menge abgibt.

Von diesem Ventiltyp unterscheidet sich der gattungsgemäße Ventiltyp darin, dass die Ventilschließstellung keine Mengenendstellung, sondern eine zwischenliegende Ventilstellung bildet. Der Benutzer kann die Fluidabgabe in diesem Fall ausgehend von der Ventilschließstellung als Zwischenstellung durch Bewegen der Einstelleinheit entweder in Richtung der ersten Mengenendstellung oder in Richtung der zweiten Mengenendstellung vornehmen. Ein derartiges gattungsgemäßes Mischventil ist in der Offenlegungsschrift WO 2009/112661 A2 offenbart. Die Rückstelleinheit ist beim dortigen Ventil von einer Schraubendruckfeder gebildet, welche die Einstelleinheit von der zweiten Mengenendstellung selbsttätig in die Ventilschließstellung zurückstellt, die folglich dadurch gebildet ist, dass die Feder ihre entspannte Federruhelage erreicht hat und keine weitere Rückstellfederkraft auf die Einstelleinheit ausübt.

Mengeneinstellventile dieser Gattung und ähnlicher Art sind in verschiedenen Ausführungen bekannt und ermöglichen es dem Benutzer, dass er durch Betätigen der Einstelleinheit die Menge an vom Ventil abgebbarem Fluid in gewünschter Weise verändern bzw. variabel einstellen kann. Im Bereich der Sanitärtechnik werden Mengeneinstellventile beispielsweise in Sanitärarmaturen dazu verwendet, die Menge an Fluid, insbesondere Wasser, variabel, z.B. stufenlos, zu regulieren und an einer Auslaufarmatur abzugeben oder anderweitig weiterzuleiten. Des Weiteren kann das Mengeneinstellventil dazu verwendet werden, mehrere Verbraucher mit unterschiedlichen Wassermengen oder mit Wasser unterschiedlicher Temperatur zu versorgen.

Neben Ausführungen mit reiner, bloßer Mengensteuerungsfunktion finden Mengeneinstellventile auch in funktionell erweiterter Form als Mischventile breite Verwendung, wie als Einhebel-Mischventile oder allgemeiner Eingriff-Mischventile z.B. in sanitären Auslaufarmaturen an Waschtischen und Waschbecken in Sanitärräumen und Küchen, an Badewannen und in Duschräumen. In diesem Fall ist das Mengeneinstellventil zusätzlich zu seiner Mengensteuerungs- bzw. Mengenregulierfunktion um eine Fluidmischfunktion erweitert, beispielsweise zum Mischen von zugeführtem Kaltwasser und zugeführtem Warmwasser, um temperiertes Mischwasser bereitzustellen. Die Bezeichnung Eingriff-Mischventil leitet sich hierbei aus der Eigenschaft der Nutzung eines gemeinsamen Betätigungselements, wie eines Griffs oder dgl., für mehrere Ventilfunktionen ab, wie der Mischfunktion und der Mengensteuerungsfunktion bzw. Mengenregulierfunktion, wobei die Bezeichnung Griff hier nicht auf eigentliche Griffelemente beschränkt ist, sondern generisch und stellvertretend auch andere Ausführungen des Betätigungselements einschließt. Wenn das Betätigungselement einen Betätigungshebel umfasst, werden diese Ventile üblicherweise auch als Einhebel-Mischventile bezeichnet.

Der Ventilgrundkörper kann z.B. als Ventilkartusche ausgebildet sein. Die Patentschriften EP 2 302 272 B1 und EP 2 354 608 B1 der Anmelderin offenbaren sanitäre Einhebel-Mischventile mit einem derartigen Ventilkartuschenaufbau. Die dort offenbarten Mischventile sind von einem nicht gattungsgemäßen, aber ähnlichen, herkömmlichen Typ von Mengeneinstellventil, bei dem eine der beiden Mengenendstellungen des Mengenbetätigungswegs der zugehörigen Mengensteuereinheit bzw. Mengeneinstelleinheit als Ventilschließstellung gebildet ist, während die andere Mengenendstellung als Volloffenstellung gebildet ist, in der das Ventil die maximal mögliche Fluidmenge abgibt, d.h. eine Fluidmenge, die nicht kleiner ist und in der Regel größer ist als die Fluidabgabemenge in allen anderen Ventilstellungen. Zusätzlich beinhaltet dieser Ventiltyp eine Rasteinheit, die für den Mengenbetätigungsweg eine überfahrbare Raststellung zwischen der Ventilschließstellung und der Volloffenstellung bereitstellt, welche üblicherweise eine sogenannte Wassersparstellung bildet und eine Wassersparfunktion erfüllt, indem sie dem Benutzer eine haptische Rückmeldung gibt, dass er damit eine meist ausreichende Wasserabgabemenge eingestellt hat, deren Überschreitung von ihm ein bewusstes und gewolltes Überfahren der Raststellung fordert. Des Weiteren kann bei diesem Ventiltyp eine Rückstelleinheit zur selbsttätigen Rückstellung der Einstelleinheit von der Volloffenstellung in die Wassersparstellung vorgesehen sein, wie z.B. in der Patentschrift EP 3 282 161 B1 der Anmelderin offenbart.

Typischerweise umfasst bei den erwähnten sanitären Einhebel-Mischventilen, insbesondere solchen mit Kartuschenaufbau, die Einstelleinheit zusätzlich zum Betätigungshebel ein an diesen angekoppeltes, beweglich im Ventilgrundkörper angeordnetes Ventilglied in Form einer Steuerscheibe oder dgl., wobei der Mengenbetätigungsweg eine Kippbewegung des Betätigungshebels um eine Hebelquerachse und eine davon bewirkte translatorische Bewegung, d.h. eine Verschiebebewegung, der Steuerscheibe beinhaltet, während für die Fluidmischfunktion ein Mischbetätigungsweg der Einstelleinheit vorgesehen ist, der eine Drehbewegung des Betätigungshebels und des Ventilglieds um eine Hebellängsachse beinhaltet.

Der Erfindung liegt als technisches Problem die Bereitstellung eines Mengeneinstellventils der eingangs genannten Art zugrunde, das gegenüber dem oben erwähnten Stand der Technik weitergehende Vorteile bietet, insbesondere im Hinblick auf seine Ventilfunktionalitäten.

Die Erfindung löst dieses Problem durch die Bereitstellung eines Mengeneinstellventils mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Das erfindungsgemäße Mengeneinstellventil beinhaltet zusätzlich zu seinen eingangs genannten, gattungsgemäßen Merkmalen eine Rasteinheit, die für den Mengenbetätigungsweg der Einstelleinheit eine überfahrbare Raststellung bereitstellt, welche die Ventilschließstellung des Mengenbetätigungsweges bildet. Dies ermöglicht eine vergleichsweise genaue, insbesondere quasi punktuelle, und funktionell zuverlässige Festlegung der Ventilschließstellung, die bei diesem Ventil nicht durch eine Endstellung des Mengenbetätigungswegs definiert ist, sondern als eine Zwischenstellung zwischen den beiden Mengenendstellungen mit jeweiligem Betätigungsabstand zu jeder der beiden Mengenendstellungen festgelegt ist.

Durch die Rasteinheit lässt sich sicherstellen, dass die Position der Einstelleinheit für die Ventilschließstellung auch bei längerem Gebrauch des Ventils zuverlässig beibehalten wird, während beispielsweise bei Festlegung der Ventilschließstellung über ein Federelement das Problem auftreten kann, dass sich die Federruhelage und damit die zugehörige Ausgangsstellung des Ventils bzw. der Einstelleinheit nach längerem Ventilgebrauch aufgrund nachlassender Spannkraft der Feder verändert.

Zudem stellt die Rasteinheit dem Benutzer in komfortabler Weise eine zuverlässige haptische Rückmeldung zur Verfügung, wenn er beim Betätigen des Ventils gewollt oder versehentlich die Ventilschließstellung überfährt.

Des Weiteren wird durch die Rasteinheit das zuverlässige selbsttätige Rückstellen der Einstelleinheit durch die Rückstelleinheit von der zweiten Mengenendstellung in die Ventilschließstellung erleichtert. Denn das Bereitstellen der überfahrbaren Raststellung für die Ventilschließstellung bedeutet, dass zum Herausbewegen der Einstelleinheit aus der Ventilschließstellung eine erhöhte Betätigungskraft erforderlich ist. Dies wiederum wirkt einem unbeabsichtigten Überfahren der Ventilschließstellung durch die Rückstelleinheit gegen Ende der selbsttätigen Rückstellbewegung der Einstelleinheit entgegen. Die Rückstelleinheit braucht daher nicht auf ein alleiniges zuverlässiges Rückstellen der Einstelleinheit in die Ventilschließstellung ausgelegt werden, sie wird vielmehr durch die Rasteinheit darin unterstützt, die Einstelleinheit zuverlässig in die Ventilschließstellung zurückzuführen. Durch die Funktion der Rasteinheit muss die Rückstelleinheit insbesondere nicht exakt daraufhin ausgelegt werden, dass ihre Rückstellkraft auf die Einstelleinheit exakt in der Ventilschließstellung auf null abgenommen hat, es kann vielmehr noch innerhalb eines Toleranzbereichs eine gewisse Rückstellkraft verbleiben, die von der Rasteinheit durch die Raststellung aufgefangen wird.

Der Benutzer kann das erfindungsgemäße Mengeneinstellventil in bedienfreundlicher Weise beispielsweise dazu nutzen, im Abschnitt des Mengenbetätigungswegs zwischen der Ventilschließstellung und der ersten Mengenendstellung als einer ersten Ventiloffenstellung die Menge an vom Ventil abgegebenem Fluid variabel einzustellen, wobei vorzugsweise die Einstelleinheit bzw. die Mengensteuereinheit derart ausgeführt sind, dass eine vom Benutzer eingestellte Ventilstellung in diesem Einstellbereich zwischen der Ventilschließstellung und der ersten Mengenendstellung beibehalten bleibt, auch wenn der Benutzer die Einstelleinheit nicht festhält bzw. diese losgelassen hat. Hingegen sorgt die Rückstelleinheit dafür, dass das Ventil selbsttätig wieder seine Ventilschließstellung erreicht, wenn der Benutzer durch entsprechendes Betätigen der Einstelleinheit bzw. Mengensteuereinheit das Ventil von der Ventilschließstellung in die zweite Mengenendstellung und damit die zweite Ventiloffenstellung verbracht hat, um eine Fluidabgabe des Ventils in zugehöriger Menge zu bewirken, und dann die Fluidabgabe beenden will und dazu mit der Betätigung der Einstelleinheit aufhört bzw. diese loslässt.

In einer Weiterbildung der Erfindung bildet die zweite Ventiloffenstellung eine maximale Ventiloffenstellung und ein Ventilöffnungsgrad ist in der ersten Ventiloffenstellung kleiner als in der zweiten Ventiloffenstellung. In dieser Ausführung kann der Benutzer folglich das Ventil dadurch maximal öffnen, dass er die Einstelleinheit der Mengensteuereinheit in die zweite Mengenendstellung verbringt, z.B. aus der Ventilschließstellung. Die Rückstelleinheit sorgt dafür, dass das Ventil von dieser maximalen Offenstellung selbsttätig in die Schließstellung zurückkehrt, wenn der Benutzer die Einstelleinheit nicht mehr betätigt bzw. loslässt. Durch Verbringen der Einstelleinheit in die erste Ventiloffenstellung, z.B. wiederum aus der Ventilschließstellung heraus, kann der Benutzer eine zugehörige Offenstellung einstellen, in der das Ventil eine entsprechende Fluidmenge abgibt, die in vorgebbarer Weise geringer ist als die Fluidabgabe in der maximalen Ventiloffenstellung.

Vorteilhaft ist diese geringere Fluidabgabe in gleicher Weise wie die maximale Fluidabgabe durch eine Endstellung der Einstelleinheit bzw. Mengensteuereinheit definiert. Beispielsweise kann es sich in diesem Fall bei der ersten Mengenendstellung um eine Wassersparstellung des Ventils handeln, in der das Fluid in einer aus Wasserspargründen gegenüber der maximalen Abgabemenge geringeren Menge abgegeben wird. Folglich kann der Benutzer das Ventil in dieser Ausführung aus der Ventilschließstellung heraus entweder für fluidsparende Anwendungen in Richtung der ersten Mengenendstellung bewegen, wobei in diesem Betätigungsabschnitt des Mengenbetätigungswegs die vom Benutzer gewählte Einstellung auch in Zwischenstellungen vorzugsweise beibehalten bleibt, auch wenn der Benutzer die Einstelleinheit loslässt, oder für vorzugsweise kurzzeitige Anwendungen mit erhöhtem Fluidbedarf in Richtung der zweiten Mengenendstellung bewegen. Von dort kehrt das Ventil aufgrund der Rückstelleinheit selbsttätig in die Schließstellung zurück, wenn der Benutzer die Einstelleinheit losgelassen hat, wodurch unnötiger Fluidverbrauch durch versehentliches Belassen der Einstelleinheit in der zweiten Mengenendstellung vermieden wird. In alternativen Ausführungen ist für entsprechende Anwendungen eine andere Zuordnung für die beiden Ventiloffenstellungen getroffen, beispielsweise ein gleich großer Ventilöffnungsgrad für beide Ventiloffenstellungen oder für die erste Ventiloffenstellung ein größerer Ventilöffnungsgrad als für die zweite Ventiloffenstellung.

In einer Weiterbildung der Erfindung nimmt ein Ventilöffnungsgrad in Abhängigkeit des Mengenbetätigungswegs von der ersten Mengenendstellung zur Ventilschließstellung stetig ab. Dies stellt eine für viele Anwendungen optimale Ausführung der Mengensteuereinheit dar. Der Benutzer kann in diesem Fall durch Verbringen der Einstelleinheit aus der Ventilschließstellung heraus in Richtung der ersten Mengenendstellung das Ventil stetig weiter öffnen. Alternativ ist eine andere Auslegung für die Mengensteuereinheit möglich, beispielsweise ein sprungartiges Ändern des Ventilöffnungsgrads in Abhängigkeit vom Mengenbetätigungsweg von der ersten Mengenendstellung zur Ventilschließstellung an einer oder mehreren Sprungstellen oder zunächst eine Zunahme und anschließend eine Abnahme des Ventilöffnungsgrads.

In einer Weiterbildung der Erfindung nimmt ein Ventilöffnungsgrad in Abhängigkeit des Mengenbetätigungswegs von der Ventilschließstellung zur zweiten Mengenendstellung stetig zu. Auch diese Ausführung der Mengensteuereinheit ist für viele Anwendungen vorteilhaft, da sie es dem Benutzer erlaubt, durch Betätigen der Einstelleinheit aus der Ventilschließstellung heraus in Richtung der zweiten Mengenendstellung die Fluidabgabemenge des Ventils stetig zu erhöhen. Wiederum sind alternative Gestaltungen z.B. mit einem oder mehreren Sprüngen für den Ventilöffnungsgrad in Abhängigkeit vom Mengenbetätigungsweg von der Ventilschließstellung zur zweiten Mengenendstellung möglich.

In einer Weiterbildung der Erfindung umfasst die Einstelleinheit ein im Ventilgehäuse längs einer Translationsrichtung beweglich angeordnetes Ventilglied und ein am Ventilgrundkörper beweglich angeordnetes Betätigungselement zum Bewegen des Ventilglieds, und die Rückstelleinheit weist ein Rückstellfederelement auf, das einerseits mit dem Ventilglied und andererseits mit dem Ventilgrundkörper oder einer im Ventilgehäuse angeordneten Lagerhülse des Betätigungselements gekoppelt ist. Diese Ventilausführung kombiniert die an sich bekannte Maßnahme, für die Einstelleinheit der Mengensteuereinheit ein translatorisch bewegbares, d.h. verschiebbares, Ventilglied und ein zugeordnetes, beweglich angeordnetes Betätigungselement vorzusehen und für die selbsttätige Rückstellung von der zweiten Mengenendstellung in die Ventilschließstellung ein Rückstellfederelement vorzusehen, das zwischen dem Ventilglied und dem Ventilgrundkörper oder zwischen dem Ventilglied und der Lagerhülse des Betätigungselements wirkt. Alternativ können die Einstelleinheit und die Rückstelleinheit andersartig realisiert sein, beispielsweise derart, dass das Ventilglied zur Mengenverstellung drehbeweglich im Ventilgehäuse angeordnet ist und die Rückstelleinheit dafür eingerichtet ist, das Ventilglied von der zweiten Mengenendstellung in die Ventilschließstellung zurückzudrehen.

In einer Ausgestaltung der Erfindung ist das Rückstellfederelement ein Schraubendruckfederelement, das mit zur Translationsrichtung paralleler Federlängsachse zwischen dem Ventilglied und der Lagerhülse angeordnet ist. Dies stellt eine für viele Anwendungen zweckmäßige und mit relativ geringem Herstellungsaufwand verbundene Realisierung für die Rückstelleinheit dar. Alternativ kann das Rückstellfederelement z.B. ein Spiralfederelement oder ein Zugfederelement sein, und/oder das Rückstellfederelement ist zwischen dem Ventilglied und dem Ventilgrundkörper angeordnet.

In einer alternativen Ausgestaltung der Erfindung ist das Rückstellfederelement ein Blattfederelement, das in einer zum Mengenbetätigungsweg parallelen Ebene zwischen dem Ventilglied und dem Ventilgehäuse angeordnet ist. Auch dies stellt für entsprechende Anwendungen eine funktionell günstige und mit relativ geringem Herstellungsaufwand verbundene Realisierung des Rückstellfederelements dar. Alternativ sind andere Konfigurationen möglich, z.B. in Form eines Blattfederelements, das in einer zum Mengenbetätigungsweg senkrechten Ebene angeordnet ist.

In einer Weiterbildung der Erfindung umfasst die Einstelleinheit ein im Ventilgehäuse längs einer Translationsrichtung beweglich angeordnetes Ventilglied und ein am Ventilgrundkörper beweglich angeordnetes Betätigungselement zum Bewegen des Ventilglieds, und die Rasteinheit weist zwei Raststrukturen in Form einer Rastnasenstruktur mit mindestens einer Rastnase und einer Rastausnehmungsstruktur mit mindestens einer mit der zugeordneten Rastnase rastend zusammenwirkenden und bei Bewegen der Einstelleinheit längs des Mengenbetätigungsweges gegenüber dieser relativbewegten Rastausnehmung auf, wobei die Rastnasenstruktur oder die Rastausnehmungsstruktur ein Federarmelement oder ein Schraubenfederelement umfasst. Die eine der beiden Raststrukturen ist an dem Ventilglied, dem Betätigungselement, dem Ventilgrundkörper oder einer im Ventilgehäuse angeordneten Lagerhülse des Betätigungselements angeordnet, die andere Raststruktur ist an einem anderen dieser vier Ventilteile angeordnet.

Dies kombiniert die Realisierung der Einstelleinheit durch das translatorisch bewegliche Ventilglied und das zugeordnete Betätigungselement mit einer vorteilhaften Realisierung der Rasteinheit aus Rastnasenstruktur und korrespondierender Rastausnehmungsstruktur. Dazu beinhaltet die Rastausnehmungsstruktur eine oder mehrere Rastausnehmungen, wobei jede Rastausnehmung zum ausrastbaren Einrasten einer zugeordneten Rastnase der Rastnasenstruktur dient. Zur Erfüllung dieser gewünschten Funktionalität sind die Raststrukturen, d.h. die korrespondierenden Paare von jeweiliger Rastausnehmung und zugeordneter Rastnase, geeignet an den genannten Ventilteilen angeordnet. In alternativen Ausführungen ist die Einstelleinheit anderweitig konfiguriert und/oder die Rasteinheit ist in einer anderen, herkömmlichen Weise realisiert, z.B. durch eine magnetisch statt formschlüssig wirkende Rasteinheit.

Die Relativbewegung der beiden kooperierenden Raststrukturen ist je nach Bedarf in an sich bekannter Weise derart realisiert, dass sich nur eine erste der beiden Raststrukturen bewegt, während die andere, zweite Raststruktur unbewegt, d.h. stationär, verbleibt oder sich nur die zweite Raststruktur bewegt und die erste Raststruktur stationär bleibt oder sich beide Raststrukturen in ungleicher Weise bewegen.

In einer Ausgestaltung der Erfindung ist das Federarmelement als Teil der Rastnasenstruktur mit einer zur Translationsrichtung parallelen oder senkrechten Armlängsachse an der Lagerhülse oder am Ventilglied oder am Betätigungselement gebildet, und die Rastausnehmungsstruktur ist am Betätigungselement oder am Ventilglied oder an der Lagerhülse gebildet ist. Diese Ausführungsoptionen der Rasteinheit erweisen sich für entsprechende Anwendungen hinsichtlich konstruktivem Aufbau und/oder hinsichtlich der Rastfunktion als vorteilhaft. Dabei wirkt die Rasteinheit zwischen einer bei der Mengenverstellung bewegten Ventilkomponente und einer stationär, d.h. gegenüber dem Ventilgrundkörper unbewegt, bleibenden Ventilkomponente.

In einer Ausgestaltung der Erfindung weist die Rastnasenstruktur das Schraubenfederelement und einen von diesem vorgespannten Rastnasenkörper auf, wobei das Schraubenfederelement mit einer zur Translationsrichtung senkrechten Schraubenfederlängsachse in einer Längsbohrung oder einer Querbohrung des Betätigungselements angeordnet ist und die Rastausnehmungsstruktur am Ventilglied oder an der Lagerhülse gebildet ist Auch diese Ausführung der Rasteinheit bietet für bestimmte Anwendungen Vorteile hinsichtlich Konstruktion und/oder Funktion. Dabei ist das Schraubenfederelement der Rastnasenstruktur platzsparend in einer Bohrung des Betätigungselements untergebracht, was eine kompakte Bauform des Ventils begünstigt. In alternativen Ausführungen kann das Schraubenfederelement anderweitig angeordnet sein, beispielsweise in einer Bohrung der Lagerhülse des Betätigungselements oder in einer Bohrung des Ventilgrundkörpers.

In einer Weiterbildung der Erfindung umfasst die Einstelleinheit ein im Ventilgehäuse in einer Translationsrichtung beweglich angeordnetes Ventilglied und ein am Ventilgrundkörper beweglich angeordnetes Betätigungselement zum Bewegen des Ventilglieds, wobei das Betätigungselement einen Betätigungshebel umfasst, der über eine Lagerhülse um eine Hebelquerachse kippbeweglich am Ventilgrundkörper gehalten ist. Das Ventilglied ist an einen ventilinneren Endbereich des Betätigungshebels angekoppelt, und der Mengenbetätigungsweg der Einstelleinheit umfasst eine Translationsbewegung des Ventilglieds längs der Translationsrichtung und eine Kippbewegung des Betätigungshebels um die Hebelquerachse.

Durch diese konstruktiven Maßnahmen lässt sich das Mengeneinstellventil als Einhebelventil realisieren, das den Betätigungshebel als Schnittstelle für den Nutzer zum Betätigen des Ventils aufweist. Dieses Einhebelventil kann je nach Bedarf und Anwendungsfall als ein rein mengenregulierendes Ventil ausgeführt sein oder alternativ unter Erweiterung seiner Funktionalitäten auf eine Mischfunktion als ein Einhebel-Mischventil. In alternativen Ausführungen kann das Betätigungselement anderweitig realisiert sein, z.B. als Drehknopf oder Drucktaste oder dergleichen.

In einer Ausgestaltung der Erfindung weist die Lagerhülse einander gegenüberliegende Anschlagflächen auf, die Endanschläge des Betätigungshebels für die erste Mengenendstellung und die zweite Mengenendstellung bilden. Durch diese Maßnahme sind die beiden Mengenendstellungen in konstruktiv und funktionell vorteilhafter Weise durch die zugeordneten Anschlagflächen an der Lagerhülse definiert. Alternativ ist eine andere Festlegung für die Mengenendstellungen möglich, beispielsweise durch geeignete Anschlagflächen, die am Ventilgrundkörper ausgebildet sind.

In entsprechenden Weiterbildungen der Erfindung umfasst die Ventileinlassstruktur einen oder mehrere Ventileinlässe und/oder einen oder mehrere Ventilauslässe. Dies stellt für entsprechende Anwendungen des Ventils zweckmäßige Ausführungen der Ventileinlassstruktur bzw. der Ventilauslassstruktur dar. Mehrere Ventileinlässe sind beispielsweise für Ausführungen zweckmäßig, bei denen das Mengeneinstellventil durch ein Einhebel-Mischventil gebildet ist. Die zu mischenden Fluide, wie Kaltwasser und Warmwasser in sanitären Anwendungen, können dann über die zugeordneten Ventileinlässe in das Ventil gelangen. Die Ausführung der Ventilauslassstruktur mit mehreren Ventilauslässen kann beispielsweise dafür genutzt werden, das vom Ventil abgegebene Fluid wahlweise mehreren Fluidverbrauchern zuzuführen, in Sanitäranwendungen z.B. einem Wannenauslauf einerseits und einer Handbrause andererseits.

In einer Ausgestaltung der Erfindung ist das Mengeneinstellventil durch ein Einhebel-Mischventil gebildet, das zusätzlich zur Mengeneinstellfunktion für eine Mischfunktion eingerichtet ist und eine die Mengensteuereinheit umfassende Fluidsteuereinheit aufweist. Für die Mischfunktion ist die Fluidsteuereinheit längs eines Mischbetätigungsweges beweglich, wobei als Bestandteile dieses Mischbetätigungsweges das Ventilglied drehbeweglich angeordnet ist und der Betätigungshebel über eine Lagerhülse um eine Hebellängsachse drehbeweglich im Ventilgehäuse angeordnet ist. In dieser Realisierung bildet das Mengeneinstellventil ein Einhebel-Mischventil, mit dem der Benutzer in einer ihm an sich von herkömmlichen Einhebel-Mischventilen bekannten Weise z.B. das Mischen der Fluide über ein Verschwenken des Betätigungshebels um seine Hebellängsachse und das Einstellen der Fluidabgabemenge über ein Verkippen des Betätigungshebels um seine Hebelquerachse bewirken kann.

In einer weiteren Ausgestaltung der Erfindung weist der Ventilgrundkörper eine im Ventilgehäuse gebildete Mischkammer, mindestens einen ersten und einen zweiten Einlasskanal zum Zuführen eines jeweiligen Fluids in die Mischkammer und mindestens einen ersten und einen zweiten Auslasskanal zum Abführen von in der Mischkammer gebildetem Mischfluid aus der Mischkammer auf, und das Ventilglied ist von einer beweglichen Steuerscheibe gebildet, die um eine Scheibenlängsachse drehbeweglich und in einer zur Scheibenlängsachse senkrechten Translationsrichtung translationsbeweglich gegen eine Verteilerfläche des Ventilgrundkörpers anliegt. Die Verteilerfläche weist jeweils mindestens eine Einlass-Durchgangsöffnung für den ersten und den zweiten Einlasskanal sowie jeweils mindestens eine Auslass-Durchgangsöffnung für den ersten und den zweiten Auslasskanal auf. Die Steuerscheibe weist mindestens eine mit den Einlass-Durchgangsöffnungen korrespondierende Einlass-Steueröffnung und mindestens eine mit den Auslass-Durchgangsöffnungen korrespondierende Auslass-Steueröffnung auf.

Dieser Aufbau des Mengeneinstellventils besitzt konstruktive und funktionelle Vorteile. Das Ventil lässt sich kompakt bauen, und das Ventilglied ist konstruktiv einfach durch die speziell konfigurierte und angeordnete Steuerscheibe realisiert, die im Zusammenwirken mit der speziell konfigurierten Verteilerfläche des Ventilgrundkörpers ein gewünschtes Mischen der zugeführten Fluide und ein wahlweises Abführen des Mischfluids aus der Mischkammer über den einen und/oder den anderen Auslasskanal ermöglicht. Die beiden Auslasskanäle können je nach Bedarf und Anwendungsfall zu einem gemeinsamen Ventilauslass oder zu getrennten Ventilauslässen führen, um dementsprechend das Mischfluid in variabel einstellbarer Menge über den einen oder getrennt an den mehreren Ventilauslässen abzugeben.

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine Längsschnittansicht eines Mengeneinstellventils in Form eines Eingriff-Mischventils mit einem Ventilgrundkörper in Kartuschenausführung in Ventilschließstellung,
- Fig. 2: eine Längsschnittansicht des Ventils von Fig. 1 in einer um 90° versetzten Schnittebene,
- Fig. 3: die Ansicht von Fig. 2 für ein anderes Mengeneinstellventil,
- Fig. 4: eine Querschnittansicht längs einer Linie IV-IV von Fig. 3,
- Fig. 5: die Längsschnittansicht von Fig. 1 für ein anderes Mengeneinstellventil in Kartuschenausführung,
- Fig. 6: die Längsschnittansicht von Fig. 1 für ein anderes Mengeneinstellventil in Kartuschenausführung,
- Fig. 7: die Längsschnittansicht von Fig. 6 mit dem Mengeneinstellventil in einer Mengenendstellung,
- Fig. 8: die Längsschnittansicht von Fig. 1 für ein anderes Mengeneinstellventil in Kartuschenausführung,
- Fig. 9: eine Querschnittansicht längs einer Linie IX-IX von Fig. 8,
- Fig. 10: die Querschnittansicht von Fig. 9 mit dem Mengeneinstellventil in einer Mengenendstellung,
- Fig. 11: eine Draufsicht auf ein Ventilglied in Form einer beweglichen Steuerscheibe,
- Fig. 12: eine Draufsicht auf eine mit der beweglichen Steuerscheibe von Fig. 11 zusammenwirkenden Verteilerfläche des Ventilgrundkörpers für ein Mengeneinstellventil,
- Fig. 13: eine Draufsicht auf die Verteilerfläche von Fig. 12 mit der aufliegenden Steuerscheibe von Fig. 11 und davor befindlicher Mischkammer in Ventilschließstellung,
- Fig. 14: die Draufsicht von Fig. 13 mit der Steuerscheibe in einer ersten Mengenendstellung und mittiger Mischstellung,
- Fig. 15: die Draufsicht von Fig. 14 mit der Steuerscheibe in der ersten Mengenendstellung und außermittiger Mischstellung,
- Fig. 16: die Draufsicht von Fig. 14 mit der Steuerscheibe in der ersten Mengenendstellung und in einer ersten Mischendstellung,
- Fig. 17: die Draufsicht von Fig. 13 mit der Steuerscheibe in einer zweiten Mengenendstellung,
- Fig. 18: die Draufsicht von Fig. 11 für eine Variante der Steuerscheibe,
- Fig. 19: die Draufsicht von Fig. 13 mit der Steuerscheibe von Fig. 18,
- Fig. 20: die Draufsicht von Fig. 14 mit der Steuerscheibe von Fig. 18 und
- Fig. 21: die Draufsicht von Fig. 17 mit der Steuerscheibe von Fig. 18.

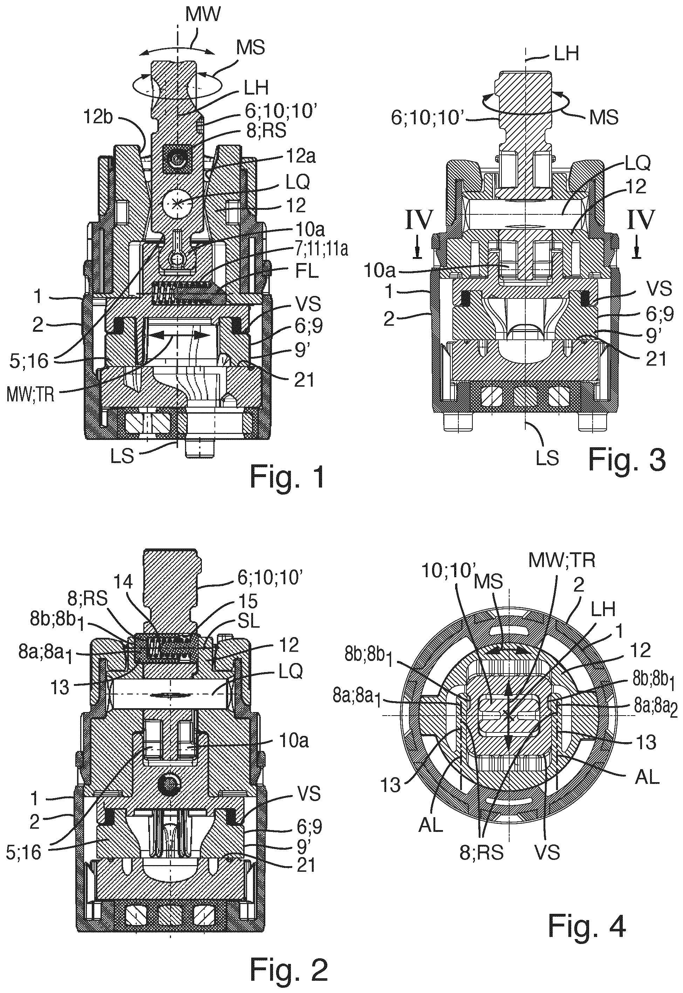

Wie in den Figuren anhand exemplarischer Ausführungsbeispiele veranschaulicht, umfasst das erfindungsgemäße Mengeneinstellventil einen Ventilgrundkörper 1, der ein Ventilgehäuse 2, eine Ventileinlassstruktur 3 zur Fluidzufuhr und eine Ventilauslassstruktur 4 zur Fluidabgabe aufweist. Des Weiteren beinhaltet das Mengeneinstellventil eine Mengensteuereinheit 5, die eine nutzerbetätigbar und beweglich am Ventilgrundkörper 1 angeordnete Einstelleinheit 6 umfasst, eine Rückstelleinheit 7 und eine Rasteinheit 8. In den gezeigten Ausführungen besitzt das Mengeneinstellventil einen Kartuschenaufbau, d.h. der Ventilgrundkörper 1 und das Ventilgehäuse 2 sind kartuschenförmig gebaut. Die für die gezeigten Ausführungsbeispiele gewählte Kartuschenbauform ist insbesondere aus den Fig. 1 bis 10 ersichtlich. Ein solcher Kartuschenaufbau ist dem Fachmann bei Ventilen dieser Art an sich bekannt. Alternativ sind andere herkömmliche Bauformen für das Mengeneinstellventil verwendbar.

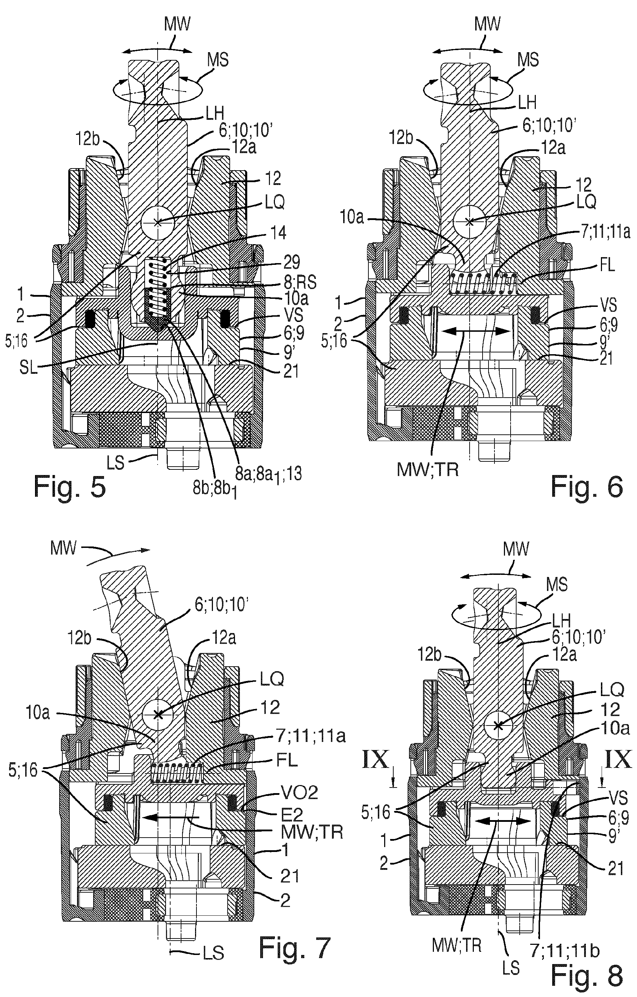

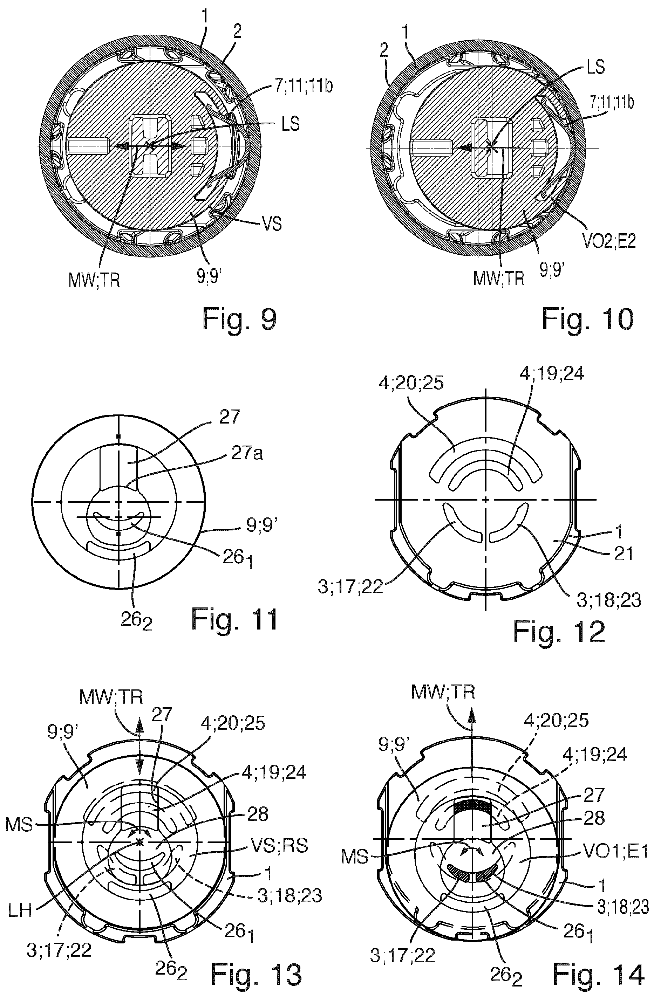

Die Einstelleinheit 6 ist längs eines Mengenbetätigungsweges MW bewegbar, und die Mengensteuereinheit 5 ist dafür eingerichtet, bei Bewegen der Einstelleinheit 6 längs des Mengenbetätigungswegs MW die Menge an über die Ventilauslassstruktur 4 abgebbarem Fluid variabel einzustellen. Dabei beinhaltet der Mengenbetätigungsweg MW eine erste Mengenendstellung E1, die eine erste Ventiloffenstellung VO1 bildet, siehe die Fig. 14 bis 16 und 20, eine zweite Mengenendstellung E2, die eine zweite Ventiloffenstellung VO2 bildet, siehe die Fig. 7, 10, 17 und 21, und eine Ventilschließstellung VS zwischen der ersten und der zweiten Mengenendstellung E1, E2, siehe die Fig. 1 bis 6, 8, 9, 13 und 19. Die Rückstelleinheit 7 dient zur selbsttätigen Rückstellung der Einstelleinheit 6 von der zweiten Mengenendstellung E2, i.e. der zweiten Ventiloffenstellung VO2, in die Ventilschließstellung VS, während die Einstelleinheit 6 längs des Abschnitts des Mengenbetätigungsweges MW zwischen der Ventilschließstellung VS und der ersten Mengenendstellung E1 in der jeweils vom Benutzer eingestellten Stellung verbleibt.

Die Rasteinheit 8 stellt für den Mengenbetätigungsweg MW der Einstelleinheit 6 eine überfahrbare Raststellung RS bereit, welche der Ventilschließstellung VS des Mengenbetätigungswegs MW entspricht.

In vorteilhaften Ausführungsformen des Ventils bildet die zweite Ventiloffenstellung VO2 eine maximale Ventiloffenstellung, und ein Ventilöffnungsgrad ist in der ersten Ventiloffenstellung VO1 kleiner als in der zweiten Ventiloffenstellung VO2. Dies ist in den gezeigten Beispielen realisiert und bedeutet, dass das Ventil in der zweiten Ventiloffenstellung VO2 die größtmögliche Menge an Fluid abgibt.

In entsprechenden Ausführungen des Ventils nimmt ein Ventilöffnungsgrad in Abhängigkeit des Mengenbetätigungsweges MW von der ersten Mengenendstellung VO1 zur Ventilschließstellung VS stetig ab. Zusätzlich oder alternativ nimmt der Ventilöffnungsgrad in Abhängigkeit des Mengenbetätigungswegs MW von der Ventilschließstellung VS zur zweiten Mengenendstellung VO1 stetig zu. In den gezeigten Ausführungsbeispielen sind beide Verläufe des Ventilöffnungsgrades in Abhängigkeit vom Mengenbetätigungsweg MW realisiert.

In vorteilhaften Ausführungsformen des Ventils umfasst die Einstelleinheit 6, wie in den gezeigten Beispielen, ein im Ventilgehäuse 2 längs einer Translationsrichtung TR beweglich angeordnetes Ventilglied 9 und ein am Ventilgrundkörper 1 beweglich angeordnetes Betätigungselement 10 zum Bewegen des Ventilglieds 9. Des Weiteren weist die Rückstelleinheit 7 ein Rückstellfederelement 11 auf, das einerseits mit dem Ventilglied 9 und andererseits mit dem Ventilgrundkörper 1 oder einer im Ventilgehäuse 2 angeordneten Lagerhülse 12 des Betätigungselements 10 gekoppelt ist. In entsprechenden Realisierungen ist das Rückstellfederelement 11, wie den Beispielen der Fig. 1 und 6, ein Schraubendruckfederelement 11a, das mit zur Translationsrichtung TR paralleler Federlängsachse FL zwischen dem Ventilglied 9 und der Lagerhülse 12 angeordnet ist. In anderen Realisierungen ist das Rückstellfederelement 11, wie im Ausführungsbeispiel der Fig. 8 bis 10, ein Blattfederelement 11b, das in einer zum Mengenbetätigungsweg MW parallelen Ebene zwischen dem Ventilglied 9 und dem Ventilgehäuse 2 angeordnet ist.

In vorteilhaften Ausführungsformen umfasst die Einstelleinheit 6, wie in den gezeigten Beispielen, das bereits erwähnte, im Ventilgehäuse 2 längs der Translationsrichtung TR beweglich angeordnete Ventilglied 9 und das am Ventilgrundkörper 1 beweglich angeordnete Betätigungselement 10 zum Bewegen des Ventilglieds 9 sowie eine Realisierung der Rasteinheit 8 durch eine Rastnasenstruktur 8a mit mindestens einer Rastnase 8a₁, 8a₂ und durch eine Rastausnehmungsstruktur 8b, die mindestens eine Rastausnehmung 8b₁, 8b₂ umfasst, die mit der zugeordneten Rastnase 8a₁, 8a₂ rastend zusammenwirkt und sich hierzu bei Bewegen der Einstelleinheit 6 längs des Mengenbetätigungsweges MW gegenüber der Rastnase 8a₁, 8a₂ relativ bewegt. In den Beispielen der Fig. 1, 2 und 5 bewegt sich hierzu die Rastnase 8a₁ aktiv gegenüber der unbewegt bleibenden Rastausnehmung 8b₁. Im Beispiel der Fig. 3 und 4 bewegen sich die beiden Rastausnehmungen 8b₁, 8b₂ aktiv gegenüber den beiden unbewegt bleibenden Rastnasen 8a₁, 8a_{2..} Die Rastnasenstruktur 8a und die Rastausnehmungsstruktur 8b sind jeweils an einer der Komponenten Ventilglied 9, Betätigungselement 10, Ventilgrundkörper 1 und Lagerhülse 12 angeordnet.

In entsprechenden Ausführungen umfasst die Rastnasenstruktur 8a, wie in den gezeigten Beispielen, oder alternativ die Rastausnehmungsstruktur 8b ein Federarmelement 13 oder ein Schraubenfederelement 14. Im Ausführungsbeispiel der Fig. 1 und 2 umfasst die Rastnasenstruktur 8a das Schraubenfederelement 14, wobei die Rastnasenstruktur 8a am Betätigungselement 10 und die Rastausnehmungsstruktur 8b an der Lagerhülse 12 angeordnet sind. Im Ausführungsbeispiel der Fig. 5 umfasst die Rastnasenstruktur 8a das Schraubenfederelement 14, wobei die Rastausnehmungsstruktur 8b am Ventilglied 9 angeordnet bzw. ausgebildet ist, speziell an einem zum Ventilglied 9 gehörigen Mitnehmerelement, über welches das Ventilglied 9 an das Betätigungselement 10 angekoppelt ist. Im Ausführungsbeispiel der Fig. 3 und 4 umfasst die Rastnasenstruktur 8a das Federarmelement 13, wobei die Rastnasenstruktur 8a am Ventilgrundkörper 1 bzw. genauer an der Lagerhülse 12 angeordnet bzw. ausgebildet ist, während die Rastausnehmungsstruktur 8b am Betätigungselement 10 gebildet ist.

In entsprechenden Realisierungen ist das Federarmelement 13 als Teil der Rastnasenstruktur 8a mit einer zur Translationsrichtung TR parallelen oder senkrechten Armlängsachse AL an der Lagerhülse 12 bzw. am Ventilglied 9 oder am Betätigungselement 10 gebildet. Die Rastausnehmungsstruktur 8b ist korrespondierend am Betätigungselement 10 oder am Ventilglied 9 bzw. an der Lagerhülse 12 gebildet. Im Beispiel der Fig. 3 und 4 ist, wie erwähnt, das Federarmelement 13 an der Lagerhülse 12 mit zur Translationsrichtung TR des Mengenbetätigungswegs MW bzw. des Ventilglieds 9 paralleler Armlängsachse AL gebildet, während die Rastausnehmungsstruktur 8b am Betätigungselement 10 gebildet ist.

In entsprechenden Realisierungen weist die Rastnasenstruktur 8a das Schraubenfederelement 14 und einen von diesem vorgespannten Rastnasenkörper 13 auf. Dabei ist das Schraubenfederelement 14 mit einer zur Translationsrichtung TR senkrechten Schraubenfederlängsachse SL in einer Längsbohrung 29 des Betätigungselements 10, wie im Ausführungsbeispiel von Fig. 5, oder in einer Querbohrung 15 des Betätigungselements 10, wie im Ausführungsbeispiel von Fig. 2, angeordnet, während die Rastausnehmungsstruktur 8b am Ventilglied 9, wie im Beispiel von Fig. 5, oder an der Lagerhülse 12, wie im Beispiel von Fig. 1 bzw. 2, gebildet ist.

In vorteilhaften Ausführungsformen umfasst die Einstelleinheit 6, wie in den gezeigten Beispielen, das Ventilglied 9, das im Ventilgehäuse 2 in der Translationsrichtung TR beweglich angeordnet ist, und das am Ventilgrundkörper 1 beweglich angeordnete Betätigungselement 10 zum Bewegen des Ventilglieds 9, wobei das Betätigungselement 10 einen Betätigungshebel 10' umfasst, der über die bereits erwähnte Lagerhülse 12 um eine Hebelquerachse LQ kippbeweglich am Ventilgrundkörper 1 gehalten ist. Das Ventilglied 9 ist an einen ventilinneren Endbereich 10a des Betätigungshebels 10' angekoppelt. Der Mengenbetätigungsweg MW der Einstelleinheit 6 umfasst in diesem Fall eine Translationsbewegung des Ventilglieds 9 längs der Translationsrichtung TR und eine Kippbewegung des Betätigungshebels 10' um die Hebelquerachse LQ.

In entsprechenden Ausführungen weist die Lagerhülse 12, wie in den gezeigten Beispielen, einander gegenüberliegende Anschlagflächen 12a, 12b auf, wobei durch diese Anschlagflächen 12a, 12b entsprechende Endanschläge des Betätigungshebels 10' gebildet sind, welche die erste Mengenendstellung E1 bzw. die zweite Mengenendstellung E2 des Mengenbetätigungsweges MW definieren.

In entsprechenden Realisierungen umfasst die Ventileinlassstruktur 3 je nach Bedarf und Anwendungsfall einen oder mehrere Ventileinlässe. Entsprechend umfasst die Ventilauslassstruktur 4 je nach Bedarf und Anwendungsfall einen oder mehrere Ventilauslässe. Weitergehend ist in entsprechenden Ausführungen, wie in den gezeigten Beispielen, das Mengeneinstellventil durch ein Einhebel-Mischventil gebildet, das zusätzlich zur Mengeneinstellfunktion für eine Mischfunktion eingerichtet ist und eine die Mengensteuereinheit 5 umfassende Fluidsteuereinheit 16 aufweist. In sanitären Anwendungen lässt sich das so konfigurierte Mengeneinstellventil dazu verwenden, über einen ersten Ventileinlass zugeführtes Kaltwasser und über einen zweiten Ventileinlass zugeführtes Warmwasser zu einem temperierten Mischfluid zu mischen und das Mischfluid über einen oder mehrere Ventilauslässe abzugeben.

Dabei ist in zugehörigen Ausführungen, wie in den gezeigten Beispielen, das Ventilglied 9 für die Mischfunktion längs eines Mischbetätigungswegs MS drehbeweglich angeordnet, und der Betätigungshebel 10' ist hierfür über die bereits erwähnte Lagerhülse 12 um eine Hebellängsachse LH drehbeweglich im Ventilgehäuse 2 angeordnet.

In vorteilhaften Ausführungen beinhaltet der Ventilgrundkörper 1, wie in den gezeigten Beispielen, eine im Ventilgehäuse 2 gebildete Mischkammer 28, mindestens einen ersten und einen zweiten Einlasskanal 17, 18 zum Zuführen des jeweiligen Fluids, wie Kaltwasser und Warmwasser, in die Mischkammer 28 sowie mindestens einen ersten und einen zweiten Auslasskanal 19, 20 zum Abführen von in der Mischkammer 28 gebildetem Mischfluid aus der Mischkammer 28. Dabei ist das Ventilglied 9 von einer beweglichen Steuerscheibe 9' gebildet, die um eine Scheibenlängsachse LS drehbeweglich und in der zur Scheibenlängsachse LS senkrechten Translationsrichtung TR translationsbeweglich gegen eine Verteilerfläche 21 des Ventilgrundkörpers 1 anliegt.

Die Verteilerfläche 21 kann hierbei, wie dem Fachmann an sich bekannt, beispielsweise von einer unbeweglich im Ventilgehäuse 2 untergebrachten Steuerscheibe gebildet sein, gegenüber der sich die Steuerscheibe 9' längs des Mengeneinstellwegs MW und des Mischbetätigungswegs MS bewegen lässt. Die Steuerscheibe 9' ist in den gezeigten Beispielen bewegungsstarr mit dem Mitnehmerelement des Ventilglieds 9 gekoppelt.

Die Verteilerfläche 21 beinhaltet jeweils mindestens eine Einlass-Durchgangsöffnung 22, 23 für den ersten und den zweiten Einlasskanal 17, 18 sowie jeweils mindestens eine Auslass-Durchgangsöffnung 24, 25 für den ersten und den zweiten Auslasskanal 19, 20. Die Steuerscheibe 9' beinhaltet mindestens eine mit den Einlass-Durchgangsöffnungen 22, 23 korrespondierende Einlass-Steueröffnung, in den gezeigten Beispielen zwei Einlass-Steueröffnungen 26₁, 26₂, sowie mindestens eine mit den Auslass-Durchgangsöffnungen 24, 25 korrespondierende Auslass-Steueröffnung 27.

Das so konfigurierte Mengeneinstellventil eignet sich insbesondere als sanitäres Einhebel-Mischventil zum Bereitstellen von temperiertem Mischwasser aus zugeführtem Kaltwasser und Warmwasser, wobei das temperierte Mischwasser je nach Bedarf und Anwendungsfall an einen oder mehrere separate Verbraucher abgegeben werden kann, in letzterem Fall beispielsweise wahlweise an einen Badewannenauslauf oder eine Handbrause. Die Mischfunktion und die Mengeneinstellfunktion sind anhand der Fig. 11 bis 21 illustriert, worauf im Folgenden näher eingegangen wird.

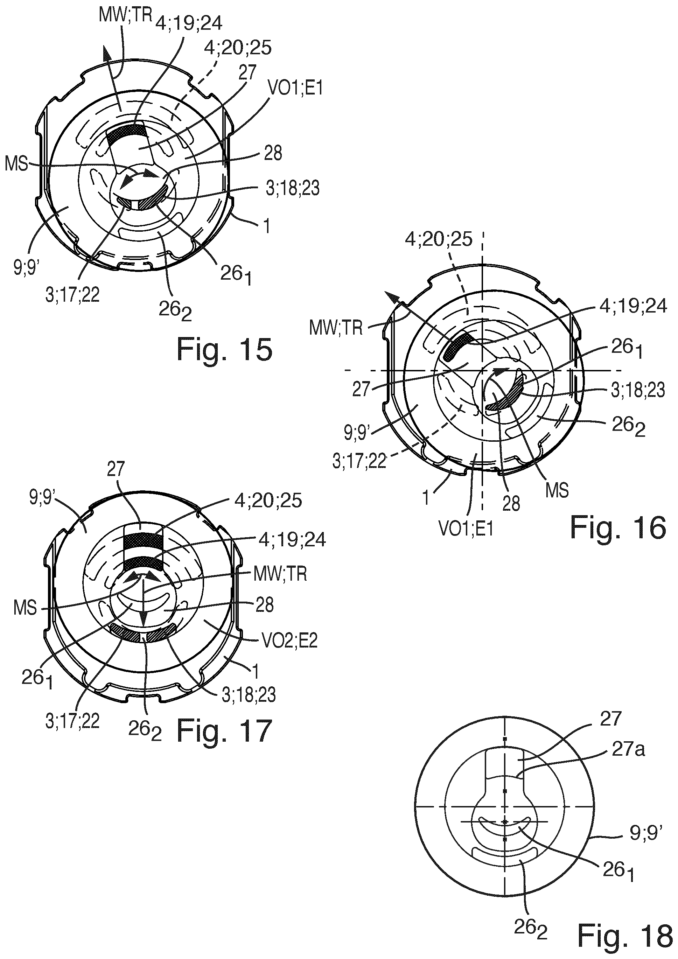

Wie aus diesen Figuren ersichtlich, beinhaltet die bewegliche Steuerscheibe 9' die beiden Einlass-Steueröffnungen 26₁, 26₂, die unterschiedliche Durchlassquerschnitte aufweisen und in der Translationsrichtung TR bzw. entlang des Mengenbetätigungswegs MW zueinander versetzt angeordnet sind. Des Weiteren beinhaltet die Steuerscheibe 9' die erwähnte Auslass-Steueröffnung 27, wobei sich die Auslass-Steueröffnung 27 in ihrem Durchlassquerschnitt bei der Ausführung gemäß Fig. 18 gegenüber der Ausführung gemäß Fig. 11 unterscheidet. Im Ausführungsbeispiel von Fig. 18 ist die Auslass-Steueröffnung 27 kleiner, indem sich eine radial innere Begrenzungsseite 27a radial weiter außen befindet als im Ausführungsbeispiel von Fig. 11. Dies kann bei gleicher Gestaltung der Verteilerfläche 21 des Ventilgrundkörpers 1 zu unterschiedlichen Fluidabgabemengen führen.

Die Verteilerfläche 21 beinhaltet, wie aus Fig. 12 ersichtlich, die beiden Einlass-Durchgangsöffnungen 22, 23 in Umfangsrichtung und damit entlang des Mischbetätigungswegs MS versetzt auf gleichem Radius angeordnet. Hingegen sind die beiden Auslass-Durchgangsöffnungen 24, 25 radial zueinander versetzt angeordnet, wobei sie sich über den gleichen Umfangswinkelbereich erstrecken.

Fig. 13 zeigt das mit der Steuerscheibe 9' von Fig. 11 und dem Ventilgrundkörper 1 bzw. der Verteilerfläche 21 von Fig. 12 ausgerüstete Ventil in der Draufsicht auf die Mischkammer 28, die darunterliegende, bewegliche Steuerscheibe 9' und die darunterliegende, stationär bleibende Verteilerfläche 21 in der Ventilschließstellung VS. Dieser Schließzustand des Ventils wird in diesem Beispiel dadurch bewirkt, dass beide Einlass-Durchgangsöffnungen 22, 23 der Verteilerfläche 21 von der Steuerscheibe 9' vollständig abgedeckt werden und kein Überlapp mit einer ihrer beiden Einlass-Steueröffnungen 26₁, 26₂ vorliegt.

Fig. 14 zeigt das Ventil in der ersten Mengenendstellung E1 des Mengenbetätigungsweges MW und damit in der ersten Ventiloffenstellung VO1 sowie in mittiger Mischstellung. In dieser Ventilstellung überlappt die Einlass-Steueröffnung 26₁ mit gleichem Überlapp einerseits mit der Einlass-Durchgangsöffnung 22 und andererseits mit der Einlass-Durchgangsöffnung 23 der Verteilerfläche 21, d.h. es gelangen gleiche Mengen der beiden getrennt zugeführten Fluide zur Mischkammer 28. Die Auslass-Steueröffnung 27 der Steuerscheibe 9' überlappt mit der Auslass-Durchgangsöffnung 24, während die Auslass-Durchgangsöffnung 25 der Verteilerfläche 21 von der Steuerscheibe 9' abgedeckt wird. Das aus gleichen Anteilen beider zugeführter Fluide gebildete Mischfluid kann folglich aus der Mischkammer 28 gezielt über den ersten Auslasskanal 19 abgegeben werden, der beispielsweise zu einem zugeordneten Ventilauslass führen kann.

Fig. 15 zeigt das Ventil wiederum in der ersten Mengenendstellung E1 bzw. ersten Ventiloffenstellung VO1, jedoch längs des Mischbetätigungswegs MS gedreht, so dass mehr Fluid über die Einlass-Durchgangsöffnung 23 in die Mischkammer 28 gelangt als über die Einlass-Durchgangsöffnung 22. Das solchermaßen aus ungleichen Anteilen der beiden zugeführten Fluide gebildete Mischfluid wird wiederum nur über die Auslass-Durchgangsöffnung 24 aus der Mischkammer 28 abgeführt, während die andere Auslass-Durchgangsöffnung 25 durch die Steuerscheibe 9' abgesperrt bleibt.

Fig. 16 zeigt das Ventil wiederum in der ersten Mengenendstellung E1 bzw. der ersten Ventiloffenstellung VO1, nun jedoch in einer Endstellung des Mischbetätigungsweges MS, in welchem nur noch das über die Einlass-Durchgangsöffnung 23 zugeführte Fluid in die Mischkammer 28 gelangt, während die andere Einlass-Durchgangsöffnung 22 von der Steuerscheibe 9' abgesperrt wird. Das zugeführte Fluid wird dann wiederum über die Auslass-Durchgangsöffnung 24 aus der Mischkammer 28 abgeführt.

Fig. 17 zeigt das Ventil in der zweiten Mengenendstellung E2 des Mengenbetätigungsweges MW und damit in der zweiten Ventiloffenstellung VO2, wiederum in einer mittigen Mischstellung. In dieser Ventilstellung überlappt die größere Einlass-Steueröffnung 26₂ der Steuerscheibe 9' jeweils hälftig mit jeder der beiden Einlass-Durchgangsöffnungen 22, 23, und die Auslass-Steueröffnung 27 überlappt mit beiden Auslass-Durchgangsöffnungen 24, 25. Folglich wird in dieser Ventilstellung eine maximal mögliche Menge an jeweils hälftig aus den beiden zugeführten Fluiden bestehendem Mischfluid bereitgestellt und über die beiden Auslass-Durchgangsöffnungen 24, 25 abgegeben. Je nach der Konfiguration der Auslasskanäle 19, 20 kann damit das Mischfluid in maximal möglicher Menge jeweils getrennt zwei zugeordneten Ventilauslässen oder einem gemeinsamen Ventilauslass zugeführt werden, in welchen die beiden Auslasskanäle 19, 20 münden.

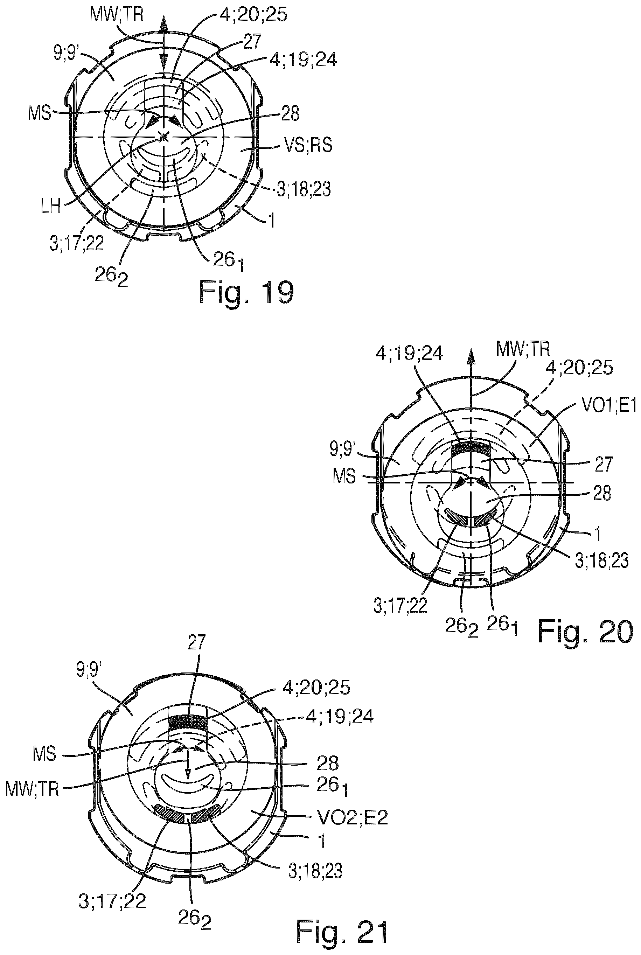

Die Fig. 19 bis 21 zeigen die zu den Fig. 13, 14 bzw. 17 analogen Verhältnisse bei Verwendung der Steuerscheibe 9' von Fig. 18 statt der Steuerscheibe 9' von Fig. 11. Somit stellt Fig. 19 wiederum die Ventilschließstellung VS dar, indem die Steuerscheibe 9' beide Einlass-Durchgangsöffnungen 22, 23 vollständig verdeckt. Fig. 20 zeigt die erste Mengenendstellung E1 bzw. erste Ventiloffenstellung VO1 bei hälftiger Mischstellung, so dass zu gleichen Anteilen der beiden getrennt zugeführten Fluide gemischtes Mischfluid selektiv über die Auslass-Durchgangsöffnung 24 abgegeben wird.

In der zweiten Mengenendstellung E2 bzw. zweiten Ventiloffenstellung VO2 gemäß Fig. 21 wird das Mischfluid im Unterschied zum Ausführungsbeispiel der Fig. 11 bis 17 selektiv nur über die Auslass-Durchgangsöffnung 25 in maximal möglicher Menge abgegeben, während die Auslass-Durchgangsöffnung 24 von der dementsprechend modifizierten Steuerscheibe 9' abgedeckt wird. Diese Ausführung eignet sich folglich besonders dazu, in der ersten Ventiloffenstellung VO1 das Mischfluid in entsprechend großer Menge selektiv über die Auslass-Durchlassöffnung 24 abzugeben und in der zweiten Ventiloffenstellung VO2 das Mischfluid in maximal möglicher Menge selektiv über die Auslass-Durchgangsöffnung 25 abzugeben, z.B. an eine andere Verwendungsstelle als bei der Mischfluidweiterleitung über die Auslass-Durchgangsöffnung 24.

Wie die gezeigten und die weiteren oben erläuterten Ausführungsbeispiele deutlich machen, stellt die Erfindung ein Mengeneinstellventil zur Verfügung, das durch seinen konstruktiven Aufbau Vorteile im Hinblick auf seine Ventilfunktionalitäten und spezieller im Hinblick auf seine Fähigkeit bietet, ausgehend von einer Ventilschließstellung eine Fluidabgabe in unterschiedlichen Mengen und/oder an unterschiedliche Verbraucherstellen durch wahlweises Betätigen des Ventils in der einen oder in der anderen Richtung des Mengenbetätigungsweges ausgehend von der zwischenliegenden Ventilschließstellung zu ermöglichen. Das erfindungsgemäße Mengeneinstellventil lässt sich insbesondere in der Sanitärtechnik verwenden, jedoch auch für nicht-sanitäre Anwendungen überall dort, wo Bedarf an derartigen Ventilfunktionalitäten besteht. Speziell ist das erfindungsgemäße Mengeneinstellventil bei Bedarf auch als erweitertes Ventil mit Mischfunktion konfigurierbar, beispielsweise als Einhebel-Mischventil.

## Patentansprüche

1. Mengeneinstellventil, insbesondere sanitäres Einhebelventil, mit
- einem Ventilgrundkörper (1), der ein Ventilgehäuse (2), eine Ventileinlassstruktur (3) zur Fluidzufuhr und eine Ventilauslassstruktur (4) zur Fluidabgabe aufweist,
- einer Mengensteuereinheit (5), die eine nutzerbetätigbar und beweglich am Ventilgrundkörper (1) angeordnete Einstelleinheit (6) umfasst,
- wobei die Einstelleinheit (6) längs eines Mengenbetätigungsweges (MW) bewegbar ist und die Mengensteuereinheit (5) dafür eingerichtet ist, bei Bewegen der Einstelleinheit (6) längs des Mengenbetätigungsweges (MW) die Menge an über die Ventilauslassstruktur (4) abgebbarem Fluid variabel einzustellen, und
- wobei der Mengenbetätigungsweg (MW) eine erste Mengenendstellung (E1) aufweist, die eine erste Ventiloffenstellung (VO1) bildet, eine zweite Mengenendstellung (E2) aufweist, die eine zweite Ventiloffenstellung (VO2) bildet, und eine Ventilschließstellung (VS) zwischen der ersten und der zweiten Mengenendstellung (E1, E2) aufweist, und
- einer Rückstelleinheit (7) zur selbsttätigen Rückstellung der Einstelleinheit (6) von der zweiten Mengenendstellung (E2) zur Ventilschließstellung (VS),
**gekennzeichnet durch**
- eine Rasteinheit (8), die für den Mengenbetätigungsweg (MW) der Einstelleinheit (6) eine überfahrbare Raststellung (RS) bereitstellt, welche die Ventilschließstellung (VS) des Mengenbetätigungsweges (MW) bildet.

2. Mengeneinstellventil nach Anspruch 1, weiter **dadurch gekennzeichnet, dass** die zweite Ventiloffenstellung (VO2) eine maximale Ventiloffenstellung bildet und ein Ventilöffnungsgrad in der ersten Ventiloffenstellung (VO1) kleiner ist als in der zweiten Ventiloffenstellung (VO2).

3. Mengeneinstellventil nach Anspruch 1 oder 2, weiter **dadurch gekennzeichnet, dass**
- ein Ventilöffnungsgrad in Abhängigkeit des Mengenbetätigungswegs (MW) von der ersten Mengenendstellung (E1) zur Ventilschließstellung (VS) stetig abnimmt und/oder
- ein Ventilöffnungsgrad in Abhängigkeit des Mengenbetätigungswegs (MW) von der Ventilschließstellung (VS) zur zweiten Mengenendstellung (E2) stetig zunimmt.

4. Mengeneinstellventil nach einem der Ansprüche 1 bis 3, weiter **dadurch gekennzeichnet, dass** die Einstelleinheit (6) ein im Ventilgehäuse (2) längs einer Translationsrichtung (TR) beweglich angeordnetes Ventilglied (9) und ein am Ventilgrundkörper (1) beweglich angeordnetes Betätigungselement (10) zum Bewegen des Ventilglieds (9) umfasst und die Rückstelleinheit (7) ein Rückstellfederelement (11) aufweist, das einerseits mit dem Ventilglied (9) und andererseits mit dem Ventilgrundkörper (1) oder einer im Ventilgehäuse (2) angeordneten Lagerhülse (12) des Betätigungselements (10) gekoppelt ist.

5. Mengeneinstellventil nach Anspruch 4, weiter **dadurch gekennzeichnet, dass**
- das Rückstellfederelement (11) ein Schraubendruckfederelement (11a) ist, das mit zur Translationsrichtung (TR) paralleler Federlängsachse (FL) zwischen dem Ventilglied (9) und der Lagerhülse (12) angeordnet ist, oder
- das Rückstellfederelement (11) ein Blattfederelement (11b) ist, das in einer zum Mengenbetätigungsweg (MW) parallelen Ebene zwischen dem Ventilglied (9) und dem Ventilgehäuse (2) angeordnet ist.

6. Mengeneinstellventil nach einem der Ansprüche 1 bis 5, weiter **dadurch gekennzeichnet, dass** die Einstelleinheit (6) ein im Ventilgehäuse (2) längs einer Translationsrichtung (TR) beweglich angeordnetes Ventilglied (9) und ein am Ventilgrundkörper (1) beweglich angeordnetes Betätigungselement (10) zum Bewegen des Ventilglieds (9) umfasst und die Rasteinheit (8) eine Rastnasenstruktur (8a) mit mindestens einer Rastnase (8a₁) und eine Rastausnehmungsstruktur (8b) mit mindestens einer mit der zugeordneten Rastnase (8a₁) rastend zusammenwirkenden und bei Bewegen der Einstelleinheit (6) längs des Mengenbetätigungsweges (MW) gegenüber dieser relativbewegten Rastausnehmung (8b₁) aufweist, wobei die Rastnasenstruktur (8a) oder die Rastausnehmungsstruktur (8b) ein Federarmelement (13) oder ein Schraubenfederelement (14) umfasst und wobei die Rastnasenstruktur (8a) und die Rastausnehmungsstruktur (8b) jeweils an einem von dem Ventilglied (9), dem Betätigungselement (10), dem Ventilgrundkörper (1) und einer im Ventilgehäuse (2) angeordneten Lagerhülse (12) des Betätigungselements (10) angeordnet sind.

7. Mengeneinstellventil nach Anspruch 6, weiter **dadurch gekennzeichnet, dass** das Federarmelement (13) als Teil der Rastnasenstruktur (8a) mit einer zur Translationsrichtung (TR) parallelen oder senkrechten Armlängsachse (AL) an der Lagerhülse (12) oder am Ventilglied (9) oder am Betätigungselement (10) gebildet ist und die Rastausnehmungsstruktur (8b) am Betätigungselement (10) oder am Ventilglied (9) oder an der Lagerhülse (12) gebildet ist.

8. Mengeneinstellventil nach Anspruch 6, weiter **dadurch gekennzeichnet, dass** die Rastnasenstruktur (8a) das Schraubenfederelement (14) und einen von diesem vorgespannten Rastnasenkörper (13) aufweist, wobei das Schraubenfederelement (14) mit einer zur Translationsrichtung (TR) senkrechten Schraubenfederlängsachse (SL) in einer Längsbohrung (29) oder einer Querbohrung (15) des Betätigungselements (10) angeordnet ist und die Rastausnehmungsstruktur (8b) am Ventilglied (9) oder an der Lagerhülse (12) gebildet ist.

9. Mengeneinstellventil nach einem der Ansprüche 1 bis 8, weiter **dadurch gekennzeichnet, dass** die Einstelleinheit (6) ein im Ventilgehäuse (2) in einer Translationsrichtung (TR) beweglich angeordnetes Ventilglied (9) und ein am Ventilgrundkörper (1) beweglich angeordnetes Betätigungselement (10) zum Bewegen des Ventilglieds (9) umfasst, wobei das Betätigungselement (10) einen Betätigungshebel (10') umfasst, der über eine Lagerhülse (12) um eine Hebelquerachse (LQ) kippbeweglich am Ventilgrundkörper (1) gehalten ist, und das Ventilglied (9) an einen ventilinneren Endbereich (10a) des Betätigungshebels (10') angekoppelt ist und wobei der Mengenbetätigungsweg (MW) der Einstelleinheit (6) eine Translationsbewegung des Ventilglieds (9) längs der Translationsrichtung (TR) und eine Kippbewegung des Betätigungshebels (10') um die Hebelquerachse (LQ) umfasst.

10. Mengeneinstellventil nach Anspruch 9, weiter **dadurch gekennzeichnet, dass** die Lagerhülse (12) einander gegenüberliegende Anschlagflächen (12a, 12b) aufweist, die Endanschläge des Betätigungshebels (10') für die erste Mengenendstellung (E1) und die zweite Mengenendstellung (E2) bilden.

11. Mengeneinstellventil nach einem der Ansprüche 1 bis 10, weiter **dadurch gekennzeichnet, dass** die Ventileinlassstruktur (3) einen oder mehrere Ventileinlässe umfasst und/oder die Ventilauslassstruktur (4) einen oder mehrere Ventilauslässe umfasst.

12. Mengeneinstellventil nach Anspruch 11 in Verbindung mit Anspruch 9, weiter **dadurch gekennzeichnet, dass** es durch ein Einhebel-Mischventil gebildet ist, das zusätzlich zur Mengeneinstellfunktion für eine Mischfunktion eingerichtet ist und eine die Mengensteuereinheit (5) umfassende Fluidsteuereinheit (16) aufweist, wobei für die Mischfunktion längs eines Mischbetätigungsweges (MS) das Ventilglied (9) drehbeweglich angeordnet ist und der Betätigungshebel (10') über eine Lagerhülse (12) um eine Hebellängsachse (LH) drehbeweglich im Ventilgehäuse (2) angeordnet ist.

13. Mengeneinstellventil nach Anspruch 12, weiter **dadurch gekennzeichnet, dass**
- der Ventilgrundkörper (1) eine im Ventilgehäuse (2) gebildete Mischkammer (28), mindestens einen ersten und einen zweiten Einlasskanal (17, 18) zum Zuführen eines jeweiligen Fluids in die Mischkammer (28) und mindestens einen ersten und einen zweiten Auslasskanal (19, 20) zum Abführen von in der Mischkammer (28) gebildetem Mischfluid aus der Mischkammer (28) aufweist und
- das Ventilglied (9) von einer beweglichen Steuerscheibe (9') gebildet ist, die um eine Scheibenlängsachse (LS) drehbeweglich und in der zur Scheibenlängsachse (LS) senkrechten Translationsrichtung (TR) translationsbeweglich gegen eine Verteilerfläche (21) des Ventilgrundkörpers (1) anliegt, wobei die Verteilerfläche (21) jeweils mindestens eine Einlass-Durchgangsöffnung (22, 23) für den ersten und den zweiten Einlasskanal (17, 18) sowie jeweils mindestens eine Auslass-Durchgangsöffnung (24, 25) für den ersten und den zweiten Auslasskanal (19, 20) aufweist und die Steuerscheibe (9') mindestens eine mit den Einlass-Durchgangsöffnungen (22, 23) korrespondierende Einlass-Steueröffnung (26₁, 26₂) und mindestens eine mit den Auslass-Durchgangsöffnungen (24, 25) korrespondierende Auslass-Steueröffnung (27) aufweist.
